(19) **Europäisches Patentamt / European Patent Office / Office européen des brevets**

(11) **EP 4 542 666 A1**

(12) **EUROPEAN PATENT APPLICATION**
published in accordance with Art. 153(4) EPC

(43) Date of publication:
**23.04.2025 Bulletin 2025/17**

(21) Application number: 23843038.3

(22) Date of filing: **20.07.2023**

(51) International Patent Classification (IPC):
*H01M 4/13* (2010.01)        *H01M 4/58* (2010.01)
*H01M 4/62* (2006.01)        *H01M 10/052* (2010.01)
*H01M 10/0562* (2010.01)

(52) Cooperative Patent Classification (CPC):
**H01M 4/13; H01M 4/58; H01M 4/62; H01M 10/052; H01M 10/0562;** Y02E 60/10

(86) International application number:
**PCT/JP2023/026598**

(87) International publication number:
**WO 2024/019115 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.07.2022 JP 2022117061**

(71) Applicant: Kureha Corporation
Chuo-ku
**Tokyo 103-8552 (JP)**

(72) Inventors:
• **SUZUKI Yumeno**
  **Tokyo 103-8552 (JP)**
• **WATANABE Keisuke**
  **Tokyo 103-8552 (JP)**
• **OKADA Kayoko**
  **Tokyo 103-8552 (JP)**

(74) Representative: **Zimmermann & Partner**
**Patentanwälte mbB**
**P.O. Box 330 920**
**80069 München (DE)**

(54) **POSITIVE ELECTRODE ACTIVE MATERIAL LAYER, ELECTRODE, AND SOLID-STATE BATTERY**

(57)    A positive electrode active material layer with which an all-solid-state battery having excellent cycle characteristics can be formed, an electrode including the positive electrode active material layer, and a semi-solid-state battery or all-solid-state battery including the electrode are provided. The positive electrode active material layer contains: a positive electrode active material (A); a solid electrolyte (B); and a binder (C), wherein the binder (C) contains a vinylidene fluoride copolymer, the vinylidene fluoride copolymer is a copolymer of vinylidene fluoride and hexafluoropropylene or a copolymer of vinylidene fluoride and chlorotrifluoroethylene, and the vinylidene fluoride copolymer contains 83.0 mass% or more and 97.0 mass% or less of a structural unit derived from vinylidene fluoride, when a total amount of structural units of the vinylidene fluoride copolymer is 100.0 mass%.

EP 4 542 666 A1

**Description**

**TECHNICAL FIELD**

The present invention relates to a positive electrode active material layer, an electrode, and a solid-state battery.

**BACKGROUND ART**

In a known secondary battery containing an electrolytic solution, there is an extremely high possibility of ignition when an abnormality such as an internal short circuit of a cell occurs in a cell, thereby increasing the cell temperature. Therefore, from the perspective of improving the safety of the cell, a semi-solid-state battery or all-solid-state battery in which most or all of an electrolytic solution is replaced with a solid electrolyte has been studied. It is considered that the semi-solid-state battery or all-solid-state battery contains an extremely small amount or zero of an electrolytic solution containing an organic solvent, and thus can achieve simplification of a safety device and is excellent in production cost and productivity.

It is assumed that an active material layer of an electrode of the semi-solid-state battery or the all-solid-state battery further contains a solid electrolyte in addition to the active material, conductive auxiliary, and binder constituting the electrode active material layer of the known secondary battery. However, a battery using an electrode containing a solid electrolyte is insufficient in cycle characteristics and problematic in durability.

On the other hand, for example, Patent Document 1 discloses a method of using a powder containing a specific element as a conductive auxiliary for a positive electrode, and Patent Document 2 discloses a method of coating an active material for a positive electrode and a conductive auxiliary.

**Citation List**

**Patent Document**

Patent Document 1: JP 2013-084496 A
Patent Document 2: JP 2018-055926 A

**SUMMARY OF INVENTION**

**TECHNICAL PROBLEM**

However, even the solid-state batteries using the positive electrodes disclosed in Patent Documents 1 and 2 fail to show sufficient improvement in cycle characteristics, and there is a demand for a solid-state battery having excellent cycle characteristics.

The present invention has been made in view of the above problems, and an object thereof is to provide a positive electrode active material layer with which an all-solid-state battery having excellent cycle characteristics can be formed, an electrode including the positive electrode active material layer, and a semi-solid-state battery or all-solid-state battery including the electrode.

**SOLUTION TO PROBLEM**

As a result of intensive studies to solve the above problems, the present inventors have found that the above problems can be solved by incorporating a specific vinylidene fluoride copolymer as a binder in a positive electrode active material layer containing a positive electrode active material and a solid electrolyte, and have completed the present invention.

An aspect of the present invention relates to the following positive electrode active material layer containing a positive electrode active material (A), a solid electrolyte (B), and a binder (C); an electrode; and a semi-solid-state battery or all-solid-state battery.

[1] A positive electrode active material layer containing: a positive electrode active material (A); a solid electrolyte (B); and a binder (C),

wherein the binder (C) contains a vinylidene fluoride copolymer,

the vinylidene fluoride copolymer is a copolymer of vinylidene fluoride and hexafluoropropylene or a copolymer of vinylidene fluoride and chlorotrifluoroethylene, and

the vinylidene fluoride copolymer contains 83.0 mass% or more and 97.0 mass% or less of a structural unit derived from vinylidene fluoride, when a total amount of structural units of the vinylidene fluoride copolymer is 100.0 mass%.

[2] The positive electrode active material layer according to [1], wherein the vinylidene fluoride copolymer has an inherent viscosity of 1.5 dL/g or more.

[3] The positive electrode active material layer according to [2], wherein the vinylidene fluoride copolymer has an inherent viscosity of 2.4 dL/g or less.

[4] The positive electrode active material layer according to any one of [1] to [3], wherein the solid electrolyte (B) is an oxide-based solid electrolyte.

[5] The positive electrode active material layer according to [4], wherein the solid electrolyte (B) contains a material represented by the following formula (1):

$$Li_{1+x+y}Al_xTi_{2-x}Si_yP_{3-y}O_{12} \qquad (1)$$

where x and y satisfy $0 \leq x \leq 1$ and $0 \leq y \leq 1$.

[6] The positive electrode active material layer according to any one of [1] to [5], wherein the positive electrode active material (A) contains a lithium metal phosphate, and the lithium metal phosphate is selected from the group consisting of $LiFePO_4$, $LiMnPO_4$, $LiCoPO_4$, and $LiNiPO_4$.

[7] An electrode including: a current collector; and the positive electrode active material layer described in any one of [1] to [6].

[8] A semi-solid-state battery or all-solid-state battery, including the electrode described in [7].

## ADVANTAGEOUS EFFECTS OF INVENTION

The present invention can provide a positive electrode active material layer with which a semi-solid-state battery or all-solid-state battery having excellent cycle characteristics can be formed, an electrode including the positive electrode active material layer, and a semi-solid-state battery or all-solid-state battery including the electrode.

## DESCRIPTION OF EMBODIMENTS

Positive Electrode Active Material Layer

The positive electrode active material layer contains a positive electrode active material (A), a solid electrolyte (B), and a binder (C).

The binder (C) contains a vinylidene fluoride copolymer.

The vinylidene fluoride copolymer is a copolymer of vinylidene fluoride and hexafluoropropylene or a copolymer of vinylidene fluoride and chlorotrifluoroethylene.

A content of a structural unit derived from vinylidene fluoride in the copolymer is in a specific range as described later.

When the positive electrode active material layer contains the specific binder (C), a semi-solid-state battery or all-solid-state battery having excellent cycle characteristics can be formed.

Hereinafter, essential or optional components contained in the positive electrode active material layer will be described.

Positive Electrode Active Material (A)

The positive electrode active material (A) is not particularly limited, and, for example, a typical and known electrode active material for a positive electrode can be used. A lithium-based positive electrode active material containing at least lithium is preferable as the electrode active material for a positive electrode. Examples of the lithium-based positive electrode active material can include a positive electrode active material represented by general formula: $Li_xM_yO_z$ (M is a transition metal element, x is from 0.02 to 2.2, y is from 1 to 2, and z is from 1.4 to 4). In the general formula, M is at least one selected from the group consisting of Co, Mn, Ni, V, Fe, and Si, and may be at least one selected from the group consisting of Co, Ni, and Mn. Specific examples of such a positive electrode active material include $LiCoO_2$, $LiMnO_2$, $LiNiO_2$, $LiVO_2$, $LiNi_{1/3}Co_{1/3}Mn_{1/3}O_2$, $LiMn_2O_4$, $Li(Ni_{0.5}Mn_{1.5})O_4$, $Li_2FeSiO_4$, and $Li_2MnSiO_4$.

Examples of the positive electrode active material (A) other than those represented by general formula $Li_xM_yO_z$

above include lithium titanate (e.g., $Li_4Ti_5O_{12}$), lithium metal phosphates ($LiFePO_4$, $LiMnPO_4$, $LiCoPO_4$, $LiNiPO_4$), transition metal oxides ($V_2O_5$, $MoO_3$), $TiS_2$, LiCoN, Si, $SiO_2$, $Li_2SiO_3$, $Li_4SiO_4$, and lithium storage intermetallic compounds (e.g., $Mg_2Sn$, $Mg_2Ge$, $Mg_2Sb$, $Cu_3Sb$). Among these, lithium metal phosphates are preferable, and, among lithium metal phosphates, $LiFePO_4$ is preferable.

A form of the positive electrode active material (A) is not particularly limited and, for example, may be a particulate form or a thin film form. From the perspective of ease of handling, the shape may be a particulate form.

When the positive electrode active material is particles, the average particle size (D50) of the particles is, for example, preferably 1 nm or greater and 100 $\mu$m or less, and more preferably 10 nm or greater and 30 $\mu$m or less.

From the perspective of being able to suppress a reaction between the positive electrode active material and the solid electrolyte, a coating layer containing a Li ion conductive oxide may be formed on a surface of the positive electrode active material (A).

Examples of the Li-ion conductive oxide include $LiNbO_3$, $Li_4Ti_5O_{12}$, and $Li_3PO_4$. A lower limit of a thickness of the coating layer is preferably 0.1 nm or more, and more preferably 1 nm or more. An upper limit of the thickness of the coating layer is preferably 100 nm or less, and more preferably 20 nm or less.

A content of the positive electrode active material (A) is not particularly limited, and is preferably 50 mass% or more and 98 mass% or less, more preferably 60 mass% or more and 95 mass% or less, and still more preferably 70 mass% or more and 90 mass% or less with respect to 100 mass% of the positive electrode active material layer.

Solid Electrolyte (B)

As the solid electrolyte (B), sulfide-based solid electrolytes, oxide-based solid electrolytes, and the like can be used. Among these, it is preferable to use an oxide-based solid electrolyte from the perspective of safety and stability of the electrolyte.

Examples of the sulfide-based solid electrolytes include $Li_2S-SiS_2$, $LiI-Li_2S-SiS_2$, $LiI-Li_2S-P_2S_5$, $LiI-Li_2O-Li_2S-P_2S_5$, $LiI-Li_2S-P_2O_5$, $LiI-Li_3PO_4-P_2S_5$, $Li_2S-P_2S_5$, and $Li_3PS_4$.

Examples of the oxide-based solid electrolytes include LLTO-based compounds ($(La, Li)TiO_3$), $Li_6La_2CaTa_2O_{12}$, $Li_6La_2ANb_2O_{12}$ (A: an alkaline earth metal), $Li_2Nd_3TeSbO_{12}$, $Li_3BO_{2.5}N_{0.5}$, $Li_9SiAlO_8$, LAGP-based compounds ($Li_{1+x}Al_xGe_{2-x}(PO4)_3$ ($0 \leq x \leq 1$)), LATP-based compounds such as $Li_2O-Al_2O_3-TiO_2-P_2O_5$ ($Li_{1+x}Al_xTi_{2-x}(PO_4)_3$ ($0 \leq x \leq 1$)), $Li_{1+x}Ti_{2-x}Al_xSi_y(PO_4)_{3-y}$ ($0 \leq x \leq 1$ and $0 \leq y \leq 1$), $Li_{1+y}Al_xM_{2-x}(PO_4)_3$ (M is one or more elements selected from the group consisting of Ti, Ge, Sr, Sn, Zr, and Ca, $0 \leq x \leq 1$ and $0 \leq y \leq 1$), $LiTi_xZr_{2-x}(PO_4)_3$ ($0 \leq x \leq 1$), LISICON ($Li_{4-2x}Zn_xGeO_4$ ($0 \leq x \leq 1$)), LIPON-based compounds ($Li_{3+y}PO_{4-x}N_x$ ($0 \leq x \leq 1$ and $0 \leq y \leq 1$)), NASICON-based compounds (e.g., $LiTi_2(PO_4)_3$), and garnet-based compounds (e.g., $Li_7La_3Zr_2O_{12}$, $Li_{7-x}La_3Zr_{1-x}Nb_xO_{12}$ ($0 \leq x \leq 1$)).

Among the oxide-based solid electrolytes, an LATP-based compound is preferable from the perspective of having high lithium ion conductivity. The LATP-based compound preferably contains a material represented by the following formula (1):

$$Li_{1+x+y}Al_xTi_{2-x}Si_yP_{3-y}O_{12} \qquad (1)$$

where x and y satisfy $0 \leq x \leq 1$ and $0 \leq y \leq 1$.

Preferable examples of preferable oxide-based solid electrolytes other than the LATP-based compound include $Li_7La_3Zr_2O_{12}$ (LLZO), $Li_{6.75}La_3Zr_{1.75}Ta_{0.25}O_{12}$ (LLZTO), $Li_{0.33}La_{0.56}TiO_3$ (LLTO), and $Li_{1.6}Al_{0.6}Ge_{1.4}(PO_4)_3$ (LAGP).

A content of the solid electrolyte (B) is not particularly limited, and is preferably 1 mass% or more and 40 mass% or less, more preferably 2 mass% or more and 20 mass% or less, and still more preferably 5 mass% or more and 15 mass% or less with respect to 100 mass% of the positive electrode active material layer.

Binder (C)

The binder (C) is a vinylidene fluoride copolymer.

The vinylidene fluoride copolymer is a copolymer of vinylidene fluoride and hexafluoropropylene (hereinafter sometimes referred to as "vinylidene fluoride copolymer (C-a)") or a copolymer of vinylidene fluoride and chlorotrifluoroethylene (hereinafter sometimes referred to as "vinylidene fluoride copolymer (C-b)").

The vinylidene fluoride copolymer (C-a) or vinylidene fluoride copolymer (C-b) is used for the purpose of forming a semi-solid-state battery or all-solid-state battery having excellent cycle characteristics.

In the following description, the vinylidene fluoride copolymer (C-a) and the vinylidene fluoride copolymer (C-b) are simply referred to as "vinylidene fluoride copolymer" when they need not be particularly distinguished from each other.

The content of the structural unit derived from vinylidene fluoride (VDF) in the vinylidene fluoride copolymer is 83.0 mass% or more and 97.0 mass% or less, preferably 90.0 mass% or more and 96.0 mass% or less, and more preferably 93.0 mass% or more and 95.0 mass% or less, when a total amount of structural units of the vinylidene fluoride copolymer is 100.0 mass%, from the viewpoint that the semi-solid-state battery or all-solid-state battery has excellent cycle characteristics.

Vinylidene Fluoride Copolymer (C-a)

The vinylidene fluoride copolymer (C-a) may be a copolymer using only vinylidene fluoride (VDF) and hexafluoropropylene (HFP), or may be a copolymer of VDF and HFP and an additional monomer other than these monomers. The additional monomer is, for example, preferably a monomer having a hydrogen-bonding polar functional group, and more preferably a carboxyl group-containing monomer, from the viewpoint that the semi-solid-state battery or all-solid-state battery has excellent cycle characteristics. Examples of the carboxyl group-containing monomer copolymerizable with vinylidene fluoride include unsaturated monobasic acids such as acrylic acid, methacrylic acid, 2-carboxyethyl acrylate and 2-carboxyethyl methacrylate; unsaturated dibasic acids such as maleic acid and citraconic acid; monoesters of unsaturated dibasic acids such as monomethyl maleate, monoethyl maleate, monomethyl citraconate, monoethyl citraconate; acryloyloxyethyl succinate, acryloyloxypropyl succinate, methacryloyloxyethyl succinate, methacryloyloxypropyl succinate.

Vinylidene Fluoride Copolymer (C-b)

The vinylidene fluoride copolymer (C-b) may be a copolymer using only vinylidene fluoride (VDF) and chlorotrifluoroethylene (CTFE), or may be a copolymer of VDF and CTFE and an additional monomer other than these monomers. The additional monomer is, for example, preferably a monomer having a hydrogen-bonding polar functional group, and more preferably a carboxyl group-containing monomer, from the viewpoint that the semi-solid-state battery or all-solid-state battery has excellent cycle characteristics. Examples of the carboxyl group-containing monomer copolymerizable with vinylidene fluoride include unsaturated monobasic acids such as acrylic acid, methacrylic acid, 2-carboxyethyl acrylate and 2-carboxyethyl methacrylate; unsaturated dibasic acids such as maleic acid and citraconic acid; monoesters of unsaturated dibasic acids such as monomethyl maleate, monoethyl maleate, monomethyl citraconate, monoethyl citraconate; acryloyloxyethyl succinate, acryloyloxypropyl succinate, methacryloyloxyethyl succinate, methacryloyloxypropyl succinate.

A lower limit of the inherent viscosity of the vinylidene fluoride copolymer is preferably 1.0 dL/g or more, more preferably 1.2 dL/g or more, and still more preferably 1.5 dL/g or more, from the viewpoint that the semi-solid-state battery or all-solid-state battery has excellent cycle characteristics.

An upper limit of the inherent viscosity of the vinylidene fluoride copolymer is preferably 3.0 dL/g or less, more preferably 2.8 dL/g or less, and still more preferably 2.4 dL/g or less, from the viewpoint that the semi-solid-state battery or all-solid-state battery has excellent cycle characteristics.

A content of the binder (C) is not particularly limited, and is preferably 1 mass% or more and 40 mass% or less, more preferably 2 mass% or more and 30 mass% or less, and still more preferably 3 mass% or more and 20 mass% or less with respect to 100 mass% of the positive electrode active material layer.

Method for Producing Binder (C)

A method for producing the binder (C) is not particularly limited, and is normally a method such as suspension polymerization, emulsion polymerization, or solution polymerization. From the viewpoint of ease of post-treatment, suspension polymerization in an aqueous system and emulsion polymerization are preferable, and suspension polymerization in an aqueous system is more preferable.

The suspension polymerization method in an aqueous system is not particularly limited, and examples thereof include a method in which the monomers used in polymerization are polymerized in an aqueous medium in the presence of a suspending agent, a polymerization initiator, a chain transfer agent, and the like.

The suspending agent is not particularly limited, and examples thereof include methyl cellulose, methoxylated methyl cellulose, propoxylated methyl cellulose, hydroxyethyl methyl cellulose, hydroxypropyl methyl cellulose, polyvinyl alcohol, polyethylene oxide, and gelatin. An amount of the suspending agent used is not particularly limited. For example, the amount is preferably 0.005 parts by mass or more and 1.0 parts by mass or less and more preferably 0.01 parts by mass or more and 0.4 parts by mass or less with respect to 100 parts by mass of all the monomers used in polymerization.

The polymerization initiator is not particularly limited, and examples thereof include diisopropyl peroxydicarbonate, di-n-propyl peroxydicarbonate, di-n-heptafluoropropyl peroxydicarbonate, isobutyryl peroxide, di(chlorofluoroacyl) peroxide, di(perfluoroacyl) peroxide, and t-butyl peroxypivalate. An amount of the polymerization initiator used is not particularly limited. For example, the amount is preferably 0.05 parts by mass or more and 5 parts by mass or less and more preferably 0.15 parts by mass or more and 2 parts by mass or less with respect to 100 parts by mass of all the monomers used in polymerization.

The chain transfer agent is not particularly limited, and examples thereof include ethyl acetate, propyl acetate, acetone, and diethyl carbonate.

In addition, a charged amount of the monomers used in polymerization is usually from 1:1 to 1:10 and preferably from 1:2 to 1:5 in terms of the mass ratio of all the monomers: water. The polymerization conditions such as polymerization temperature and polymerization time when the suspension polymerization is performed are not particularly limited and, for example, a known polymerization conditions may be employed. The polymerization temperature T is selected as appropriate according to the 10-hour half-life temperature T10 of the polymerization initiator, and is normally selected in the range of $T10 - 25°C \leq T \leq T10 + 25°C$. For example, T10 of t-butyl peroxypivalate and diisopropyl peroxydicarbonate are 54.6°C and 40.5°C, respectively (refer to product catalog of NOF Corporation). Therefore, in polymerization using t-butyl peroxypivalate and diisopropyl peroxydicarbonate as the polymerization initiator, the polymerization temperature T is selected as appropriate in a range of $29.6°C \leq T \leq 79.6°C$ or $15.5°C \leq T \leq 65.5°C$, respectively. Although the polymerization time is not particularly limited, the polymerization time is preferably from 1 to 24 hours considering productivity, for example.

Other components

The positive electrode active material layer may contain components (hereinafter, also referred to as "other components") other than the above-described positive electrode active material (A), solid electrolyte (B), and binder (C) as long as the effects of the present invention are not impaired. As the other components, all known additives can be used, and examples thereof include a conductive auxiliary, an insulating inorganic filler such as alumina, magnesia, or silica, an insulating organic filler such as polytetrafluoroethylene, polyimide, or polyacrylonitrile, a plasticizer such as ethylene carbonate, propylene carbonate, or ethyl methyl carbonate, a Li salt such as $LiPF_6$, LiFSI, or LiTFSI, a dispersant, a flame retardant, and an antifoaming agent.

Examples of the conductive auxiliary (D) include carbon black and carbon nanotubes. One of these may be used alone, or two or more thereof may be used in combination.

A content of the conductive auxiliary (D) is not particularly limited, but is preferably 0.05 mass% or more and 20 mass% or less, more preferably 0.1 mass% or more and 15 mass% or less, and still more preferably 0.5 mass% or more and 10 mass% or less with respect to 100 mass% of the positive electrode active material layer.

Electrode

The electrode means a positive electrode. The electrode includes a current collector and the above-described positive electrode active material layer.

The electrode includes the above-described positive electrode active material layer, and thus can form a semi-solid-state battery or all-solid-state battery having excellent cycle characteristics.

Current collector

A current collector is a terminal for extracting electricity. A material for each of the current collectors is not particularly limited, and metal foil, metal mesh, or the like of aluminum, copper, iron, stainless steel, steel, nickel, titanium, or the like can be used. In addition, the current collector may be one produced by applying the metal foil, metal mesh, or the like on a surface of a medium.

A bulk density of the electrode is not particularly limited, and is, for example, preferably 1.5 g/cm$^3$ or more and 5.0 g/cm$^3$ or less.

A basis weight of the electrode is not particularly limited, and is, for example, preferably 20 g/m$^2$ or more and 1000 g/m$^2$ or less.

Method for Producing Electrode

Examples of a method for producing the electrode include an aspect including: mixing the positive electrode active material (A), the solid electrolyte (B), the binder (C), other components if necessary, and a nonaqueous solvent (S) to prepare a positive electrode slurry; and applying the obtained positive electrode slurry to a current collector, and then drying the slurry. That is, in the above embodiment, through drying the positive electrode slurry, the positive electrode active material layer is prepared, and the electrode is also prepared.

Examples of the nonaqueous solvent (S) include N-methyl-2-pyrrolidone (also called "NMP" hereafter), dimethylformamide, N-dimethylformamide, N,N-dimethylacetamide, dimethyl sulfoxide, N,N-dimethyl sulfoxide, hexamethylphosphoramide, dioxane, tetrahydrofuran, tetramethylurea, triethyl phosphate, trimethyl phosphate, acetone, cyclohexanone, methyl ethyl ketone, and tetrahydrofuran. One of these may be used alone, or two or more thereof may be used in combination.

A method of application is not particularly limited. For example, a doctor blade method, a reverse roll method, a comma bar method, a gravure method, an air knife method, a die coating method, and a dip coating method can be used.

A drying temperature is, for example, preferably 80°C or higher and 300°C or lower, more preferably 90°C or higher and 200°C or lower, and still more preferably 100°C or higher and 180°C or lower.

The drying time is, for example, preferably 10 seconds or more and 300 minutes or less, and more preferably 1 minute or more and 200 minutes or less.

The drying may be performed multiple times at various temperatures. During the drying, pressure may be applied.

All-solid-state Battery

The all-solid-state battery includes the electrode of the above-described embodiment. As the all-solid-state battery, typical and known members other than the positive electrode, for example, a negative electrode, a separator, and the like can be used.

Semi-solid-state Battery

The semi-solid-state battery includes the electrode of the above-described embodiment. As the semi-solid-state battery, typical and known members other than the positive electrode, for example, a negative electrode, a separator, and the like can be used. An amount of the electrolytic solution contained in the semi-solid-state battery is preferably from 1 to 95%, more preferably from 5 to 90%, and still more preferably from 10 to 80%, when a volume of the electrolytic solution contained in a known secondary battery is 100%.

Cycle Characteristics

As the cycle characteristics of the solid-state battery, a discharge capacity after 50 cycles of constant current charge/discharge under conditions: an ambient temperature of 25°C, a charge/discharge rate of 0.5 C, and a voltage range of from 2.5 V to 4.0 V is preferably 140 mAh/g or more, more preferably 145 mAh/g or more, and still more preferably 150 mAh/g or more.

**EXAMPLES**

The present invention will be described in further detail hereafter based on Examples and Comparative Examples, but the present invention is not limited to the following examples.

Examples 1 to 5 and Comparative Examples 1 to 6

Material Used

In Examples and Comparative Examples, the following A1 was used as the positive electrode active material (A).

A1: $LiFePO_4$

In Examples and Comparative Examples, the following B1 was used as the solid electrolyte (B).

B1: $Li_{1+x+y}Al_xTi_{2-x}Si_yP_{3-y}O_{12}$

(LATP) (available from Ohara Inc., "LICGC™ PW-01 (particle diameter: 1 $\mu$m)")

In Examples and Comparative Examples, the following C1 to C10 were prepared and used as the binder (C). The inherent viscosity of each of the prepared binders was measured according to the following method.

Measurement of inherent viscosity

Each binder (80 mg) was dissolved in 20 ml of N,N-dimethylformamide to prepare a binder-containing solution. Then, a viscosity $\eta_1$ of the binder-containing solution was measured in a thermostatic bath at 30°C using an Ubbelohde viscometer. Similarly, the viscosity $\eta_0$ of N,N-dimethylformamide was measured in a thermostatic bath at 30°C using the Ubbelohde viscometer. Then, the inherent viscosity $\eta$ was determined based on the following equation.

## Inherent viscosity $\eta = (1/C) \cdot \ln(\eta_1/\eta_0)$

In this equation, C is a concentration per unit of the binder-containing solution, here 0.4 g/dl.

Preparation Example of Binder C1 (VDF/HFP)

An autoclave with a volume of 2 L was charged with 290 parts by mass of ion-exchanged water, 0.15 parts by mass of methyl cellulose, 57.9 parts by mass of vinylidene fluoride (VDF), 7.8 parts by mass of hexafluoropropylene (HFP), and 0.9 parts by mass of diisopropyl peroxy dicarbonate (IPP), and the mixture was polymerized at 45°C. VDF (34.3 parts by mass) was after-charged to obtain a copolymer. The obtained copolymer was heat-treated at 95°C for 60 minutes, then dehydrated, washed with water, and further dried at 80°C for 20 hours to obtain a binder C1. The binder C1 contained 94.3 mass% of VDF and 5.7 mass% of HFP with respect to the total amount of the structural units. The inherent viscosity ($\eta$) of the binder C1 was 1.5 dL/g.

Preparation Example of Binder C2 (VDF/HFP)

An autoclave with a volume of 2 L was charged with 253.0 parts by mass of ion-exchanged water, 0.05 parts by mass of methyl cellulose, 90.0 parts by mass of vinylidene fluoride (VDF), 10.0 parts by mass of hexafluoropropylene (HFP), and 0.4 parts by mass of IPP, and 1.0 parts by mass of ethyl acetate, and the mixture was polymerized at 45°C. The obtained copolymer was heat-treated at 95°C for 60 minutes, then spin-dried, washed with water, and further dried at 80°C for 20 hours to obtain a binder C2. The binder C2 contained 93.0 mass% of VDF and 7.0 mass% of HFP with respect to the total amount of the structural units. The inherent viscosity ($\eta$) of the binder C2 was 1.9 dL/g.

Preparation Example of Binder C3 (VDF/HFP)

VDF and HFP were polymerized in the same manner as for the binder C2, except that 256.4 parts by mass of ion-exchanged water, 0.05 parts by mass of methyl cellulose, 82.0 parts by mass of VDF, 18.0 parts by mass of HFP, 0.4 parts by mass of IPP, and 0.9 parts by mass of ethyl acetate were used, to obtain a binder C3. The binder C3 contained 85.0 mass% of VDF and 15.0 mass% of HFP with respect to the total amount of the structural units. The inherent viscosity ($\eta$) of the binder C3 was 1.8 dL/g.

Preparation Example of Binder C4 (VDF/CTFE)

VDF and CTFE were polymerized in the same manner as for the preparation example of the binder C2, except that 256.6 parts by mass of ion-exchanged water, 0.05 parts by mass of methyl cellulose, 96.0 parts by mass of VDF, 4.0 parts by mass of chlorotrifluoroethylene (CTFE) instead of HFP, 0.6 parts by mass of IPP, and 0.59 parts by mass of ethyl acetate were used, to obtain a binder C4. The binder C4 contained 96.0 mass% of VDF and 4.0 mass% of CTFE with respect to the total amount of the structural units. The inherent viscosity ($\eta$) of the binder C4 was 2.1 dL/g.

Preparation Example of Binder C5 (VDF/HFP/MMM)

VDF, HFP, and MMM were polymerized in the same manner as in the preparation example of the binder C2, except that 259 parts by mass of ion-exchanged water, 0.15 parts by mass of methyl cellulose, 90.0 parts by mass of VDF, 10.0 parts by mass of HFP, 0.5 parts by mass of monomethyl maleate (MMM), and 0.5 parts by mass of IPP were used, to obtain a binder C5. The amount of each monomer in the binder C5 was calculated so that the total amount of VDF, HFP, and MMM was 100 mol% after the VDF/HFP ratio was calculated by 19F-NMR and the VDF/MMM ratio was calculated using the method described below.

The VDF/MMM ratio in the polymer (molar ratio of the amount of the structural unit derived from vinylidene fluoride and the amount of the structural unit derived from monomethyl maleate) was calculated based on the calculation method using an IR spectrum and a calibration curve disclosed in WO 2009/084483. The binder C5 contained 92.5 mass% of VDF, 7.0 mass% of HFP, and 0.5 mass% of MMM with respect to the total amount of the structural units. The inherent viscosity ($\eta$) of the binder C5 was 2.6 dL/g.

Preparation Example of Binder C6 (PVDF)

VDF was polymerized in the same manner as in the preparation example of the binder C2, except that 231.8 parts by mass of ion-exchanged water, 0.05 parts by mass of methyl cellulose, 100 parts by mass of VDF, 0.7 parts by mass of IPP, and 0.7 parts by mass of ethyl acetate were used, to obtain a binder C6 as a homopolymer of VDF. The binder C6 contained 100.0 mass% of VDF with respect to the total amount of the structural units. The inherent viscosity (η) of the binder C6 was 2.1 dL/g.

Preparation Example of Binder C7 (PVDF)

VDF was polymerized in the same manner as in the preparation example of the binder C2, except that 213.8 parts by mass of ion-exchanged water, 0.05 parts by mass of methyl cellulose, 100 parts by mass of VDF, 0.3 parts by mass of IPP, and 0.4 parts by mass of ethyl acetate were used, to obtain a binder C7 as a homopolymer of VDF. The binder C7 contained 100.0 mass% of VDF with respect to the total amount of the structural units. The inherent viscosity (η) of the binder C7 was 3.1 dL/g.

Preparation Example of Binder C8 (VDF/HFP/MMM)

VDF, HFP, and MMM were polymerized in the same manner as in the preparation example of the binder C2, except that 240.2 parts by mass of ion-exchanged water, 0.2 parts by mass of methyl cellulose, 96.7 parts by mass of VDF, 3.0 parts by mass of HFP, 0.3 parts by mass of MMM, and 0.47 parts by mass of IPP were used, to obtain a binder C8. The binder C8 contained 97.4 mass% of VDF, 2.3 mass% of HFP, and 0.3 mass% of MMM with respect to the total amount of the structural units. The inherent viscosity (η) of the binder C8 was 3.1 dL/g.

Preparation Example of Binder C9 (VDF/TFE)

VDF and TFE were polymerized with reference to Japanese Patent No. 5949915 to obtain a binder C9. The binder C9 contained 78.0 mass% of VDF and 22.0 mass% of TFE with respect to the total amount of the structural units. The inherent viscosity (η) of the binder C9 was 2.4 dL/g.

Preparation Example of Binder C10 (VDF/TFE)

VDF and TFE were polymerized with reference to Japanese Patent No. 5949915 to obtain a binder C10. The binder C10 contained 86.8 mass% of VDF and 13.2 mass% of TFE with respect to the total amount of the structural units. The inherent viscosity (η) of the binder C9 was 2.3 dL/g.

Preparation Example of Binder C11 (VDF/HFP)

VDF and HFP were polymerized in the same manner as in the preparation example of the binder C2, except that 258.0 parts by mass of ion-exchanged water, 0.05 parts by mass of methyl cellulose, 75 parts by mass of VDF, 25 parts by mass of HFP, and 0.7 parts by mass of IPP were used, to obtain a binder C11. The binder C11 contained 81.2 mass% of VDF and 18.8 mass% of HFP with respect to the total amount of the structural units. The inherent viscosity (η) of the binder C11 was 1.6 dL/g.

Detailed information of the obtained binders C1 to C11 is shown in Table 1.

[Table 1]

| Binder (C) | Type | Composition | Content (mass%) of structural unit derived from each monomer | | | | | η(dL/g) |
|---|---|---|---|---|---|---|---|---|
| | | | VDF | HFP | MMM | CTFE | TFE | |
| C1 | C-a | VDF/HFP | 94.3 | 5.7 | - | - | - | 1.5 |
| C2 | C-a | VDF/HFP | 93.0 | 7.0 | - | - | - | 1.9 |
| C3 | C-a | VDF/HFP | 85.0 | 15.0 | - | - | - | 1.8 |
| C4 | C-b | VDF/CTFE | 96.0 | - | - | 4.0 | - | 2.1 |
| C5 | C-a | VDF/HFP/MMM | 92.5 | 7.0 | 0.5 | - | - | 2.6 |
| C6 | - | PVDF | 100.0 | - | - | - | - | 2.1 |
| C7 | - | PVDF | 100.0 | - | - | - | - | 3.1 |
| C8 | C-a | VDF/HFP/MMM | 97.4 | 2.3 | 0.3 | - | - | 3.1 |
| C9 | - | VDF/TFE | 78.0 | - | - | - | 22.0 | 2.4 |

(continued)

| Binder (C) | Type | Composition | Content (mass%) of structural unit derived from each monomer | | | | | $\eta$(dL/g) |
|---|---|---|---|---|---|---|---|---|
| | | | VDF | HFP | MMM | CTFE | TFE | |
| C10 | - | VDF/TFE | 86.8 | - | - | - | 13.2 | 2.3 |
| C11 | C-a | VDF/HFP | 81.2 | 18.8 | - | - | - | 1.6 |

In Examples and Comparative Examples, the following D1 was used as the conductive auxiliary (D).

D1: Carbon nanotube (CNT) dispersion

In Examples and Comparative Examples, the following S1 was used as the nonaqueous solvents (S).

S1: N-methyl-2-pyrrolidone (NMP)

Preparation of Positive Electrode Slurry

Each binder (C) was dispersed in N-methyl-2-pyrrolidone (NMP) at room temperature to make the concentration of the binder (C) to be a target concentration, and then the solution temperature was raised to 50°C to dissolve each binder (C) (hereinafter, referred to as "binder solution"). The positive electrode active material (A), the solid electrolyte (B), the conductive auxiliary (D), and each of the binder solutions described above were used, and the components were mixed to attain a ratio of the positive electrode active material (A)/the solid electrolyte (B)/the conductive auxiliary (D)/the binder (C) of 90/10/2/10 (mass%) to obtain each positive electrode slurry. A solid content of the positive electrode slurry was adjusted using NMP.

(Positive electrode production)

Each of the obtained positive electrode slurries was applied to an aluminum foil (thickness: 15 $\mu$m) and then dried at 120°C. Each of the obtained preliminary positive electrodes was pressed and further heat-treated at 120°C for 3 hours. Thus, each positive electrode having an electrode bulk density of 2.3 g/cm$^3$ and a basis weight of 200 g/m$^2$ was obtained.

Preparation of Test Cell

Each of the obtained positive electrodes was punched into $\Phi$ 14 mm by a hand punch, and a coin cell of 2016 size was prepared using metallic Li as a counter electrode and a PE single-layer separator (thickness: 20 $\mu$m) as a separator. The electrolytic solution used was a solution containing 1.2M LiPF$_6$ (1 mass% of vinylene carbonate (VC)) in a mixed solution of ethylene carbonate (EC) and ethyl methyl carbonate (EMC) (EC/EMC = 3/7 (volume ratio)).

Evaluation

Charge/discharge characteristics of each of the obtained test cells were measured according to the following method.

Cycle Characteristics

Each test cell was subjected to CCCV charge/CC discharge under conditions: an ambient temperature of 25°C, a charge/discharge rate of 0.5 C, a voltage range of from 2.5 V to 4.0 V, and a termination current value in CCCV charge of 0.05 C, and the discharge capacity after 50 cycles were measured. The results are indicated in Table 2.

[Table 2]

| Positive electrode active material layer | Positive electrode active material (A) | Solid electrolyte (B) | Binder (C) | Conductive auxiliary (D) | Discharge capacity (mAh/g) after 50 cycles |
|---|---|---|---|---|---|
| | Type/parts by mass | Type/parts by mass | Type/parts by mass | Type/parts by mass | |
| Example 1 | A1/90 | B1/10 | C1/10 | D1/2 | 157.0 |
| Example 2 | A1/90 | B1/10 | C2/10 | D1/2 | 154.1 |
| Example 3 | A1/90 | B1/10 | C3/1 0 | D1/2 | 151.7 |
| Example 4 | A1/90 | B1/10 | C4/10 | D1/2 | 153.8 |
| Example 5 | A1/90 | B1/10 | C5/10 | D1/2 | 144.9 |
| Comparative Example 1 | A1/90 | B1/10 | C6/1 0 | D1/2 | 123.7 |
| Comparative Example 2 | A1/90 | B1/10 | C7/10 | D1/2 | 78.4 |
| Comparative Example 3 | A1/90 | B1/10 | C8/1 0 | D1/2 | 128.6 |
| Comparative Example 4 | A1/90 | B1/10 | C9/1 0 | D1/2 | 138.5 |
| Comparative Example 5 | A1/90 | B1/10 | C10/10 | D1/2 | 130.2 |
| Comparative Example 6 | A1/90 | B1/10 | C11/10 | D1/2 | 138.9 |

From Table 2, the positive electrode active material layers of Comparative Examples 1 and 2 in which the homopolymer of VDF was used as the binder (C) had a discharge capacity after 50 cycles of only 123.7 mAh/g, at most.

In addition, both the positive electrode active material layers of Comparative Examples 4 and 5 in which the copolymer of VDF and TFE was used as the binder (C) had a discharge capacity of less than 140 mAh/g after 50 cycles. Similarly, the positive electrode active material layer of Comparative Example 3 using, as the binder (C), the copolymer of VDF and HFP in which the amount of the structural unit derived from VDF was more than 97.0 mass% had a discharge capacity after 50 cycles of less than 140 mAh/g.

Also, the positive electrode active material layer of Comparative Example 6 using, as the binder (C), the copolymer of VDF and HFP in which the amount of the structural unit derived from VDF was less than 83 mass% had a discharge capacity after 50 cycles of less than 140 mAh/g.

On the other hand, it can be seen that all the positive electrode active material layers using the copolymers of VDF and HFP and the copolymers of VDF and CTFE in which the structural unit derived from VDF was 83.0 mass% or more and 97.0 mass% or less had a discharge capacity of 140 mAh/g or more after 50 cycles, as shown in Examples 1 to 5, and thus had excellent cycle characteristics.

**Claims**

1. A positive electrode active material layer comprising: a positive electrode active material (A); a solid electrolyte (B); and a binder (C), wherein

   the binder (C) contains a vinylidene fluoride copolymer,
   the vinylidene fluoride copolymer is a copolymer of vinylidene fluoride and hexafluoropropylene or a copolymer of vinylidene fluoride and chlorotrifluoroethylene, and
   the vinylidene fluoride copolymer contains 83.0 mass% or more and 97.0 mass% or less of a structural unit derived from vinylidene fluoride, when a total amount of structural units of the vinylidene fluoride copolymer is 100.0 mass%.

2. The positive electrode active material layer according to claim 1, wherein the vinylidene fluoride copolymer has an inherent viscosity of 1.5 dL/g or more.

3. The positive electrode active material layer according to claim 2, wherein the vinylidene fluoride copolymer has an inherent viscosity of 2.4 dL/g or less.

4. The positive electrode active material layer according to any one of claims 1 to 3, wherein the solid electrolyte (B) is an oxide-based solid electrolyte.

5. The positive electrode active material layer according to claim 4, wherein the solid electrolyte (B) contains a material represented by formula (1):

$$Li_{1+x+y}Al_xTi_{2-x}Si_yP_{3-y}O_{12} \qquad (1)$$

where x and y satisfy $0 \leq x \leq 1$ and $0 \leq y \leq 1$.

6. The positive electrode active material layer according to any one of claims 1 to 3, wherein the positive electrode active material (A) contains a lithium metal phosphate, and
the lithium metal phosphate is selected from the group consisting of $LiFePO_4$, $LiMnPO_4$, $LiCoPO_4$, and $LiNiPO_4$.

7. An electrode comprising: a current collector; and the positive electrode active material layer described in any one of claims 1 to 3.

8. A semi-solid-state battery or all-solid-state battery, comprising the electrode described in claim 7.

## INTERNATIONAL SEARCH REPORT

International application No.

**PCT/JP2023/026598**

### A. CLASSIFICATION OF SUBJECT MATTER

*H01M 4/13*(2010.01)i; *H01M 4/58*(2010.01)i; *H01M 4/62*(2006.01)i; *H01M 10/052*(2010.01)i; *H01M 10/0562*(2010.01)i
FI:  H01M4/13; H01M4/62 Z; H01M4/58; H01M10/0562; H01M10/052

According to International Patent Classification (IPC) or to both national classification and IPC

### B. FIELDS SEARCHED

Minimum documentation searched (classification system followed by classification symbols)

H01M4/13; H01M4/58; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2021/100362 A1 (FUJIFILM CORP) 27 May 2021 (2021-05-27) paragraphs [0001], [0025], [0087], [0128], synthesis example 5 | 1, 4-8 |
| A | | 2, 3 |
| X | JP 2016-025027 A (TOYOTA MOTOR CORP) 08 February 2016 (2016-02-08) paragraphs [0015], [0019], preparation example 3 | 1, 6-8 |
| A | | 2-5 |
| A | JP 11-312536 A (SONY CORP) 09 November 1999 (1999-11-09) entire text | 1-8 |

☐ Further documents are listed in the continuation of Box C.  ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 October 2023 | 17 October 2023 |

| Name and mailing address of the ISA/JP | Authorized officer |
|---|---|
| Japan Patent Office (ISA/JP) 3-4-3 Kasumigaseki, Chiyoda-ku, Tokyo 100-8915 Japan | |
| | Telephone No. |

Form PCT/ISA/210 (second sheet) (January 2015)

EP 4 542 666 A1

**INTERNATIONAL SEARCH REPORT**
**Information on patent family members**

International application No.

**PCT/JP2023/026598**

| Patent document cited in search report | Publication date (day/month/year) | Patent family member(s) | Publication date (day/month/year) |
|---|---|---|---|
| WO 2021/100362 A1 | 27 May 2021 | US 2022/0255118 A1 paragraphs [0002], [0065], [0220], [0292], synthesis example 5<br>CN 114616710 A | |
| JP 2016-025027 A | 08 February 2016 | US 2016/0028107 A1 paragraphs [0017], [0029], preparation example 3<br>CN 105304863 A | |
| JP 11-312536 A | 09 November 1999 | US 6506523 B1 entire text<br>EP 1001477 A1<br>BR 9906385 A<br>TW 419850 B<br>CA 2294292 A1<br>KR 10-0613799 B1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013084496 A
- JP 2018055926 A
- WO 2009084483 A
- JP 5949915 B